(19) Europäisches Patentamt
European Patent Office
Office européen des brevets

(11) **EP 3 367 551 A1**

(12) **EUROPEAN PATENT APPLICATION**
published in accordance with Art. 153(4) EPC

(43) Date of publication:
**29.08.2018 Bulletin 2018/35**

(51) Int Cl.:
***H02M 7/48*** (2007.01)   ***H02J 3/38*** (2006.01)

(21) Application number: **16857133.9**

(22) Date of filing: **04.07.2016**

(86) International application number:
**PCT/JP2016/069818**

(87) International publication number:
**WO 2017/068815 (27.04.2017 Gazette 2017/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **19.10.2015 JP 2015205364**

(71) Applicant: **SUMITOMO Electric Industries, Ltd.**
**Osaka-shi, Osaka 541-0041 (JP)**

(72) Inventor: **AYAI, Naoki**
**Osaka-shi**
**Osaka 554-0024 (JP)**

(74) Representative: **Boult Wade Tennant LLP**
**Verulam Gardens**
**70 Gray's Inn Road**
**London WC1X 8BT (GB)**

(54) **POWER CONVERSION DEVICE AND CONTROL METHOD THEREOF**

(57)   This power conversion device performs power conversion via an intermediate bus between a plurality of DC power supplies and an AC grid, and includes: a plurality of DC/DC converters respectively provided between the intermediate bus and the plurality of DC power supplies; an intermediate capacitor connected to the intermediate bus; a DC/AC converter provided between the intermediate bus and the AC grid; and a control unit configured to control the plurality of DC/DC converters and the DC/AC converter, the control unit performing control of allocating, to the plurality of DC/DC converters, an active power to be outputted from the DC/AC converter, and allocating, to the plurality of DC/DC converters, a sum of reactive powers to be outputted from the DC/AC converter and the intermediate capacitor, using an allocation coefficient different from an allocation coefficient for the active power.

FIG. 2

**Description**

## TECHNICAL FIELD

The present invention relates to a power conversion device and a control method therefor.

This application claims priority on Japanese Patent Application No. 2015-205364 filed on October 19, 2015, the entire contents of which are incorporated herein by reference.

## BACKGROUND ART

For converting the voltage of a DC power supply to a single-phase AC voltage, for example, a power conversion device including a boost converter (DC/DC converter) and an inverter circuit is used. In a traditional power conversion device, the voltage of a DC power supply is stepped up by a boost converter to a certain voltage higher than the peak voltage on the AC side, and thereafter, the resultant voltage is converted to an AC voltage by an inverter circuit. In this case, the boost converter and the inverter circuit always perform high-speed switching operations. Therefore, switching loss occurs in each switching element and iron loss occurs in a reactor. These losses become a factor for hampering improvement in conversion efficiency.

Meanwhile, the following control is proposed: while the voltage of the DC power supply and the absolute value of the instantaneous voltage on the AC side are always compared with each other, the boost converter is caused to perform switching operation only during a period in which step-up operation is needed, and the inverter circuit is caused to perform switching operation only during a period in which a step-down operation is needed (see, for example, Patent Literature 1). In such control, the period in which the switching operation is stopped is provided to the boost converter and the inverter circuit. If the stop period is provided, switching loss and reactor iron loss are reduced accordingly, leading to improvement in conversion efficiency.

Also in a power conversion device for which a plurality of DC power supplies are provided and which includes a plurality of DC/DC converters correspondingly for the respective DC power supplies, similarly, conversion efficiency can be improved (for example, see Patent Literature 2).

## CITATION LIST

[PATENT LITERATURE]

PATENT LITERATURE 1: Japanese Laid-Open Patent Publication No. 2014-241714
PATENT LITERATURE 2: Japanese Laid-Open Patent Publication No. 2014-241715

## SUMMARY OF INVENTION

The present invention is a power conversion device that performs power conversion via an intermediate bus between a plurality of DC power supplies and an AC grid, the power conversion device including: a plurality of DC/DC converters respectively provided between the intermediate bus and the plurality of DC power supplies; an intermediate capacitor connected to the intermediate bus; a DC/AC converter provided between the intermediate bus and the AC grid; and a control unit configured to control the plurality of DC/DC converters and the DC/AC converter, the control unit performing control of allocating, to the plurality of DC/DC converters, an active power to be outputted from the DC/AC converter, and allocating, to the plurality of DC/DC converters, a sum of reactive powers to be outputted from the DC/AC converter and the intermediate capacitor, using an allocation coefficient different from an allocation coefficient for the active power.

A control method aspect is a control method for a power conversion device that includes: a plurality of DC/DC converters respectively provided between an intermediate bus and a plurality of DC power supplies; an intermediate capacitor connected to the intermediate bus; a DC/AC converter provided between the intermediate bus and an AC grid; and a control unit configured to control the plurality of DC/DC converters and the DC/AC converter, the power conversion device being configured to perform power conversion via the intermediate bus between the plurality of DC power supplies and the AC grid, the control method being executed by the control unit and including: allocating, to the plurality of DC/DC converters, an active power to be outputted from the DC/AC converter, and allocating, to the plurality of DC/DC converters, a sum of reactive powers to be outputted from the DC/AC converter and the intermediate capacitor, using an allocation coefficient different from an allocation coefficient for the active power.

**BRIEF DESCRIPTION OF DRAWINGS**

FIG. 1 is a single-line connection diagram showing the schematic configuration of a power conversion device provided between a plurality of DC power supplies and an AC grid.

FIG. 2 is an example of a circuit diagram of the power conversion device shown in FIG. 1.

FIG. 3 is a bar graph showing a result of peak currents Ipeak (Ipeak_1 to Ipeak_4) of DC/DC converters and the sum of squares of the currents thereof, in a scale of (1/20) for convenience sake, in a case where the outputs of a first DC/DC converter and a second DC/DC converter are set at 2067 W and the outputs of a third DC/DC converter and a fourth DC/DC converter are set at 1033 W.

FIG. 4 is a bar graph showing the peak values of currents flowing through the respective DC/DC converters and the sum of squares of currents of all the DC/DC converters in a case where charging/discharging of the storage battery is stopped and the other three DC/DC converters for solar battery are operating at the maximum outputs.

FIG. 5 is a bar graph showing the current peak values of the respective DC/DC converters and the sum of squares of currents of all the DC/DC converters in a case where the outputs of the first to third DC/DC converters for solar battery are 2067 W and the output (for charging) of the fourth DC/DC converter for storage battery is changed to 0 W, - 2067 W, - 3100 W, and - 4133 W.

FIG. 6 is a bar graph showing the current peak values of the respective DC/DC converters and the sum of squares of currents of all the DC/DC converters in a case of performing discharging of the storage battery at the same time as photovoltaic generation.

FIG. 7 is a bar graph showing a result of calculation of the current peak values and the sum of squares in a case where photovoltaic panels are paralleled-off and only one DC/DC converter supplies a reactive current when power generation is stopped.

**DESCRIPTION OF EMBODIMENTS**

[Problems to be solved by the present disclosure]

In the power conversion devices of Patent Literature 1, 2 described above, switching control is performed so that a DC/DC converter outputs a power that coincides with a power outputted from the power conversion device to an AC grid. Therefore, the DC/DC converter supplies an active current and a reactive current to an intermediate bus. In addition, in a case where a plurality of DC/DC converters are provided as in Patent Literature 2, allocation of currents is performed. Expressions representing the gist of this current allocation are as follows. It is noted that, in the following, there is no meaning in difference of character font (upright/italic), and the same character represents the same value (the same applies hereinafter).

First, symbols are defined as follows.

$I^*_a$: a command value for an output current from the power conversion device to the AC grid

$C_a$: the capacitance of an AC-side capacitor

$V_a$: an AC grid voltage

$I^*_{inv}$: a current command value for an inverter circuit at a stage before a current flows to the AC-side capacitor

$L_a$: the inductance of an AC reactor

$V^*_{inv}$: a voltage command value for the inverter circuit at a stage before passing through an AC reactor

$V^*_o$: a command value for a voltage to arise on the intermediate bus (the greater one of the maximum value of $V^*_{g.i}$, and $V^*_{inv}$)

$C_o$: the capacitance of an intermediate capacitor

$V^*_{g.i}$: a DC input voltage value (i is numbers 1, 2, ..., for specifying the plurality of DC power supplies and the DC/DC converters)

$I^*_{g.i}$: a DC input current command value

s: Laplace operator

A notation "< >" indicates an average value of a value in the brackets.

$$I^*_{in.i} = (I^*_{inv} \times V^*_{inv} + sC_oV^*_o \times V^*_o) \times \frac{I^*_{g.i}}{\sum_{i=1}^{n}\langle I^*_{g.i} \times V^*_{g.i}\rangle} \qquad (1)$$

$$I_{in.i}^* = \frac{I_{inv}^* \times V_{inv}^* + sC_o V_o^* \times V_o^*}{V_{g.i}^*} \times \frac{I_{g.i}^* \times V_{g.i}^*}{\sum_{i=1}^{n} \langle I_{g.i}^* \times V_{g.i}^* \rangle} \qquad (2)$$

$$I_{inv}^* = I_a^* + sC_a V_a \qquad (3)$$

$$V_{inv}^* = V_a + sL_a I_{inv}^* \qquad (4)$$

The part inside the parentheses on the right-hand side of the above expression (1) is a power outputted from the DC/DC converter, and contains an active power and a reactive power. In expression (2) obtained by deforming expression (1), a current command value $I_{in.i}^*$ is obtained by allocating a power to be outputted from the DC/DC converter so as to be proportional to an active power $I_{g.i}^* \times V_{g.i}^*$ supplied from the DC power supply, and then dividing the resultant value by the voltage $V_{g.i}^*$ of the DC power supply. That is, in this case, the active power and the reactive power to be outputted from the DC/DC converter are both allocated so as to be proportional to an active power outputted from the DC power supply.

Here, for example, in a case where the DC power supply is a photovoltaic panel, the active power outputted from the DC/DC converter is controlled so as to achieve an optimum operation point at which the output of the photovoltaic panel is maximized.

However, in the power conversion device of Patent Literature 2, a more reactive power is allocated to the DC/DC converter to which a photovoltaic panel that outputs a greater active power is connected, and thus a current is likely to concentrate on a specific DC/DC converter, so that power loss occurring in this DC/DC converter increases.

In view of the above problem, an object of the present disclosure is to further reduce power loss in a power conversion device.

[Effects of the present disclosure]

The power conversion device and the control method therefor of the present disclosure can further reduce power loss.

[Summary of embodiments]

Summary of the embodiments of the present invention includes at least the following.

(1) This is a power conversion device that performs power conversion via an intermediate bus between a plurality of DC power supplies and an AC grid, the power conversion device including: a plurality of DC/DC converters respectively provided between the intermediate bus and the plurality of DC power supplies; an intermediate capacitor connected to the intermediate bus; a DC/AC converter provided between the intermediate bus and the AC grid; and a control unit configured to control the plurality of DC/DC converters and the DC/AC converter, the control unit performing control of allocating, to the plurality of DC/DC converters, an active power to be outputted from the DC/AC converter, and allocating, to the plurality of DC/DC converters, a sum of reactive powers to be outputted from the DC/AC converter and the intermediate capacitor, using an allocation coefficient different from an allocation coefficient for the active power.

In the power conversion device configured as described above, it is possible to optimally allocate reactive powers using an allocation coefficient different from an allocation coefficient for an active power. Therefore, for example, by setting the allocation coefficient so as to equalize peak values of powers of the respective DC/DC converters, it becomes possible to perform such allocation as to minimize the peak values of currents flowing through the respective DC/DC converters. In addition, for example, focusing on power loss occurring in the DC/DC converters, it is also possible to set the allocation coefficient so as to minimize the power loss.

It is noted that, from the above, the control unit can also be expressed as follows, though this is also relevant to (2) below. That is, it can be recited that "the control unit performs control of allocating, to the plurality of DC/DC converters, an active power to be outputted from the DC/AC converter, and allocating, to the plurality of DC/DC converters, a sum of reactive powers to be outputted from the DC/AC converter and the intermediate capacitor, using an allocation coefficient different from an allocation coefficient for the active power, thereby equalizing peak values of powers of the DC/DC converters".

(2) In the power conversion device of (1), the control unit may perform control of allocating the sum of the reactive powers to the plurality of DC/DC converters so that peak values of powers or currents of the plurality of DC/DC converters are equalized.

In this case, it is possible to minimize the peak values of currents flowing through the respective DC/DC converters.

(3) In the power conversion device of (1), when maximum outputs of the plurality of DC/DC converters are the same as each other, the control unit may perform control of allocating the sum of the reactive powers to the plurality of DC/DC converters so that reactive powers or reactive currents of the plurality of DC/DC converters are equalized.

In this case, it is possible to minimize the peak values of currents flowing through the respective DC/DC converters.

(4) In the power conversion device of (1), the control unit may set the allocation coefficient for the reactive currents, in proportion to a square of an input voltage to each of the plurality of DC/DC converters.

In this case, it is possible to minimize power loss occurring in each DC/DC converter.

(5) In the power conversion device of any one of (1) to (4), the control unit may exclude, from a target of reactive power allocation, the DC/DC converter to which a storage battery is connected, among the plurality of DC/DC converters.

In this case, it is possible to prevent power loss from occurring due to a reactive current flowing through the storage battery.

(6) A control method aspect is a control method for a power conversion device that includes: a plurality of DC/DC converters respectively provided between an intermediate bus and a plurality of DC power supplies; an intermediate capacitor connected to the intermediate bus; a DC/AC converter provided between the intermediate bus and an AC grid; and a control unit configured to control the plurality of DC/DC converters and the DC/AC converter, the power conversion device being configured to perform power conversion via the intermediate bus between the plurality of DC power supplies and the AC grid, the control method being executed by the control unit and including: allocating, to the plurality of DC/DC converters, an active power to be outputted from the DC/AC converter, and allocating, to the plurality of DC/DC converters, a sum of reactive powers to be outputted from the DC/AC converter and the intermediate capacitor, using an allocation coefficient different from an allocation coefficient for the active power.

In the control method for the power conversion device as described above, it is possible to optimally allocate reactive powers using an allocation coefficient different from an allocation coefficient for an active power. Therefore, for example, by setting the allocation coefficient so as to equalize peak values of powers of the respective DC/DC converters, it becomes possible to perform such allocation as to minimize the peak values of currents flowing through the respective DC/DC converters. In addition, for example, focusing on power loss occurring in the DC/DC converters, it is also possible to set the allocation coefficient so as to minimize the power loss.

[Details of embodiments]

Hereinafter, the details of embodiments of the present invention will be described with reference to the drawings.

<<Circuit configuration example>>

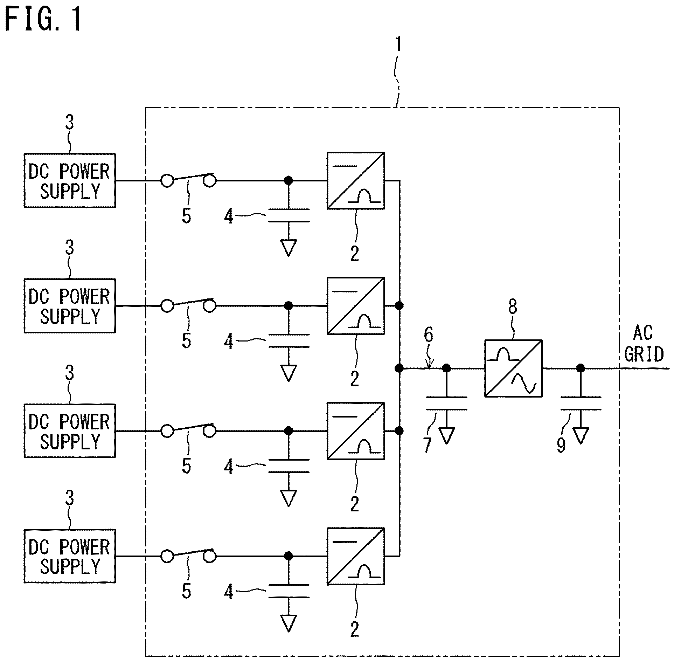

FIG. 1 is a single-line connection diagram showing the schematic configuration of a power conversion device 1 provided between a plurality of DC power supplies 3 and an AC grid. In FIG. 1, the power conversion device 1 performs DC-to-AC power conversion, and includes a plurality of DC/DC converters 2 as boost converters, and a DC/AC converter 8 as an inverter circuit connected via an intermediate bus (DC bus) 6. In this example, four pairs of DC power supplies 3 and DC/DC converters 2 are shown, but the "four pairs" are merely an example of the plurality.

Each DC/DC converter 2 is provided between the corresponding DC power supply 3 and the intermediate bus 6. Each DC/DC converter 2 is provided, with a DC-side capacitor 4 and a switch 5 provided between the DC/DC converter 2 and the DC power supply 3. Here, an example in which the switches 5 are provided correspondingly for all the DC power supplies 3, is shown. However, the switches 5 may be provided only for necessary DC power supplies 3. An intermediate capacitor 7 is connected to the intermediate bus 6. The DC/AC converter 8 is provided, via an AC-side capacitor 9, between the intermediate bus 6 and the AC grid. It is noted that the DC power supply 3 is a photovoltaic panel or a storage battery, for example.

The power conversion device 1 performs control according to a minimum switching conversion method, in which, while the voltage of each DC power supply 3 and the absolute value of the instantaneous voltage on the AC side are always compared with each other, the DC/DC converter 2 is caused to perform switching operation during only a period in which step-up operation is needed, and the DC/AC converter 8 is caused to perform switching operation during only a period in which step-down operation is needed. In such control, a period in which switching operation is stopped is provided to each of the DC/DC converter 2 and the DC/AC converter 8. If the stop period is provided, switching loss and reactor iron loss are reduced accordingly, so that conversion efficiency improves. It is noted that, in a case where the voltages of the DC power supplies 3 are different, the control is performed using the highest voltage value as a reference.

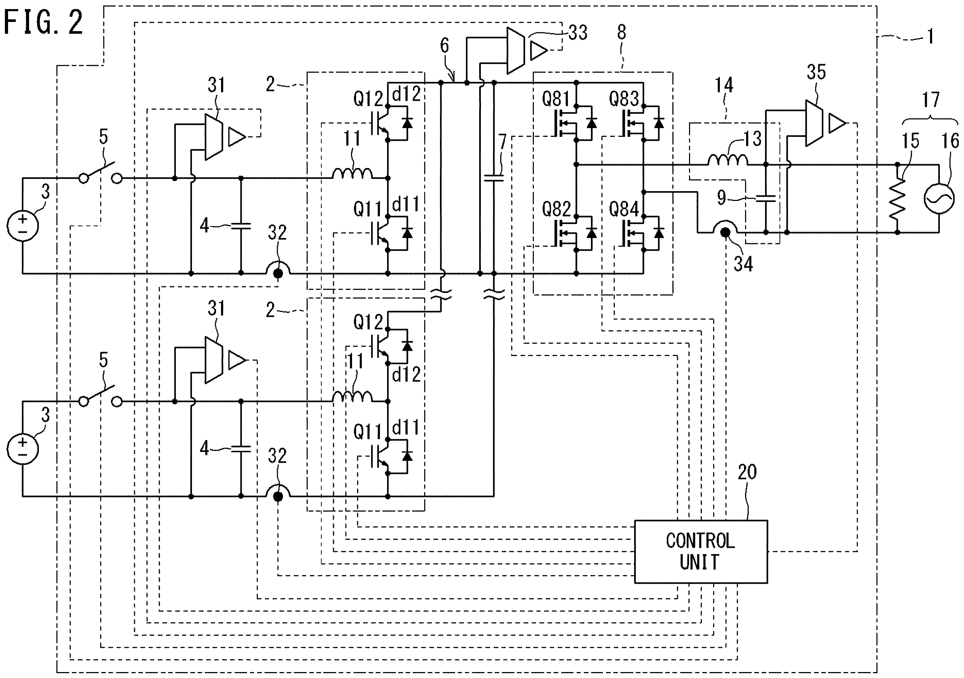

FIG. 2 is an example of a circuit diagram of the power conversion device 1 shown in FIG. 1. For convenience of illustration, only two pairs of the four pairs of the DC power supplies 3 and the DC/DC converters 2 are shown, but the other two pairs are also connected in parallel to the intermediate bus 6 in the same manner.

The parts corresponding to those in FIG. 1 are denoted by the same reference characters. In FIG. 2, the power conversion device 1 includes a filter circuit 14, a control unit 20, and measurement sensors described later, as well as the DC-side capacitors 4, the DC/DC converters 2, the intermediate capacitor 7, and the DC/AC converter 8 described above.

Each DC/DC converter 2 is a step-up chopper (step-down is also possible) including a DC reactor 11 and a pair of switching elements Q11, Q12. As the switching elements Q11, Q12, for example, IGBTs (Insulated Gate Bipolar Transistors) are used. Diodes d11, d12 are respectively connected in parallel to the switching elements Q11, Q12, in opposite-polarity directions. It is noted that, other than the above, FETs (Field Effect Transistors) may be used as the switching elements Q11, Q12.

The DC/AC converter 8 includes four switching elements Q81, Q82, Q83, Q84 forming a full bridge. The switching elements Q81 to Q84 are, for example, FETs.

The filter circuit 14 is composed of an AC reactor 13 and the AC-side capacitor 9, and prevents a high-frequency component contained in the AC output of the DC/AC converter 8 from leaking to the AC grid 17. It is noted that the AC grid 17 includes an AC load 15 and a commercial power grid 16.

As the aforementioned sensors, provided are: a voltage sensor 31 for detecting a voltage ($V_g$) between both ends of the DC-side capacitor 4; a current sensor 32 for detecting a current ($I_{in}$) flowing through each DC/DC converter 2; a voltage sensor 33 for detecting a voltage between both ends of the intermediate capacitor 7, i.e., a voltage ($V_o$) between two lines of the intermediate bus 6; a current sensor 34 for detecting a current ($I_{inv}$) flowing on the AC side of the DC/AC converter 8; and a voltage sensor 35 for detecting a voltage between both ends of the AC-side capacitor 9. Measurement output signals from all the sensors are sent to the control unit 20. The control unit 20 performs switching control for the DC/DC converters 2 and the DC/AC converter 8.

The control unit 20, for example, includes a CPU and executes software (computer program) by a computer, thereby realizing necessary control functions. The software is stored in a storage device (not shown) of the control unit 20. It is noted that the control unit 20 may be configured from a circuit using only hardware not including a CPU.

<<Control theory>>

Next, the control theory of the power conversion device 1 configured as described above will be described. First, various values will be defined as follows.

$V_a$: an AC grid voltage detected by the voltage sensor 35
$I^*_a$: a command value for an AC current to flow to the AC grid 17
$I_{inv}$: an AC current detected by the current sensor 34
$C_a$: the capacitance of the AC-side capacitor 9
$I^*_{inv}$: a command value for a current to flow from the DC/AC converter 8 to the AC reactor 13
$V^*_{inv}$: a voltage command value for the AC side of the DC/AC converter 8
$R_{inv}$: a resistance component of the DC/AC converter 8
$L_{inv}$: the inductance of the AC reactor 13
$I^*_{in}$: a command value for a current to flow to the DC reactor 11 of the DC/DC converter 2
$I_{in}$: a DC current detected by the current sensor 32
$C_o$: the capacitance of the intermediate capacitor 7
$V^*_o$: a command value for a voltage to arise between both ends of the intermediate capacitor 7
$V_o$: an intermediate voltage detected by the voltage sensor 33
$V_g$: a DC voltage detected by the voltage sensor 31
$R_{in}$: a resistance component of the DC/DC converter 2
$L_{inv}$: the inductance of the DC reactor 11

An equation of the instantaneous power at the intermediate bus 6 is represented by the following expression (5). It is noted that (t) indicates a function of time.

$$\sum_{i=1}^{n} I^*_{in_i}(t) \times \left[ V_{g_i} - \left( R_{in_i} I^*_{in_i}(t) + L_{in_i} \frac{dI^*_{in_i}(t)}{dt} \right) \right] = I^*_{inv}(t) V^*_{inv}(t) + C_o \frac{dV^*_o(t)}{dt} V^*_o(t) \qquad (5)$$

The left-hand side of expression (5) represents the sum of powers supplied from the plurality of DC/DC converters 2. On the right-hand side, the first term represents a power supplied to the DC/AC converter 8, and the second term represents a reactive power for the intermediate capacitor 7.

From here, expressions will be analyzed as follows.

$$I^*_{inv}(t) = I^*_a(t) + C_a \frac{dV_a(t)}{dt} \qquad (6)$$

$$= I^*_a \sin \omega t + C_a V_a \cos \omega t \qquad (7)$$

$$= I^*_{inv} \sin(\omega t + \varphi) \qquad I^*_{inv} = \sqrt{I^{*2}_a + (C_a V_a)^2} \qquad \varphi = \tan^{-1} \frac{C_a V_a}{I^*_a} \qquad (8)$$

$$\approx I^*_{inv} \sin \omega t \qquad (9)$$

$$V^*_{inv}(t) = V^*_a(t) - \left( R_{inv} I^*_{inv}(t) + L_{inv} \frac{dI^*_{inv}(t)}{dt} \right) \qquad (10)$$

$$= V^*_a \sin \omega t - (R_{inv} I^*_{inv} \sin(\omega t + \varphi) + \omega L_{inv} I^*_{inv} \cos(\omega t + \varphi)) \qquad (11)$$

$$= V^*_a \sin \omega t - V_\delta \sin(\omega t + \varphi + \varphi') \qquad (12)$$

$$V_\delta = \sqrt{I^{*}_{inv}{}^2 \left( R_{inv}{}^2 + (\omega L_{inv})^2 \right)} \qquad \varphi' = \tan^{-1} \frac{\omega L_{inv}}{R_{inv}}$$

$$\approx V^*_{inv} \sin \omega t \qquad (13)$$

$$V^*_o(t) = \begin{cases} V_g'(t) & V_g'(t) \geq V^*_{inv}(t) \\ V^*_{inv}(t) & V_g'(t) < V^*_{inv}(t) \end{cases} \qquad (14)$$

$$V_g' = \max_{i=1 \sim n} \left[ V_{g\_i} - \left( R_{in\_i} I^*_{in\_i}(t) + L_{in\_i} \frac{dI^*_{in\_i}(t)}{dt} \right) \right] \qquad (15)$$

$$\sum_{i=1}^{n} I^*_{in\_i}(t) \times \left[ V_{g\_i} - \left( R_{in\_i} I^*_{in\_i}(t) + L_{in\_i} \frac{dI^*_{in\_i}(t)}{dt} \right) \right]$$

$$\approx \begin{cases} I^*_{inv} V^*_{inv} \sin^2(\omega t) + C_o {V^*_{inv}}^2 \frac{d|\sin \omega t|}{dt} |\sin \omega t| & (|V^*_{inv}| \geq V_g') \\ I^*_{inv} V^*_{inv} \sin^2(\omega t) & (|V^*_{inv}| < V_g') \end{cases} \quad (16)$$

$$= \frac{I^*_{inv} V^*_{inv}}{2} - \frac{I^*_{inv} V^*_{inv}}{2} \cos(2\omega t) + F(2\omega t) \quad (17)$$

$$F(2\omega t) = \begin{cases} \dfrac{C_o {V^*_{inv}}^2}{2} \sin(2\omega t) & (|V^*_{inv}| \geq V_g' \ \& \ 0 \leq \omega t \leq \pi) \\ -\dfrac{C_o {V^*_{inv}}^2}{2} \sin(2\omega t) & (|V^*_{inv}| \geq V_g' \ \& \ \pi \leq \omega t \leq 2\pi) \\ 0 & (|V^*_{inv}| < V_g') \end{cases}$$

$$= \sum_{i=1}^{n} \left[ g_i \frac{|I^*_{inv} V^*_{inv}|}{2} + w_i \left\{ -\frac{|I^*_{inv} V^*_{inv}|}{2} \cos(2\omega t) + F(2\omega t) \right\} \right] \quad (18)$$

$$\sum_{i=1}^{n} g_i = \sum_{i=1}^{n} w_i = \begin{cases} 1 & DC \to AC \\ -1 & AC \to DC \end{cases} \quad (19)$$

As shown by expression (9) and expression (13), if $I^*_{inv}(t)$ and $V^*_{inv}(t)$ are approximated so that they can be represented as sine waves synchronized with each other, the right-hand side of expression (5) is arranged as shown by expression (17). Further, the right-hand side is rewritten in a form of linear combination so as to correspond to powers supplied from the respective DC/DC converters 2, thereby obtaining expression (18).

Here, $g_i$ and $w_i$ are allocation coefficients representing a ratio between an active power and a reactive power to be supplied from each DC/DC converter, and the sign of a power transmitted from the DC power supply to the AC side is defined as positive. The sign of $g_i$ is positive when photovoltaic generation or discharging of the storage battery is performed, and is negative when the storage battery is charged.

As shown by expression (19), when the power flow direction as a whole is from DC to AC, the following is satisfied.

$$\sum_{i=1}^{n} g_i = \sum_{i=1}^{n} w_i = 1$$

When the power flow direction as a whole is from AC to DC, the following is satisfied.

$$\sum_{i=1}^{n} g_i = \sum_{i=1}^{n} w_i = -1$$

$$I^*_{in\_i}(t) = \frac{g_i \frac{I^*_{inv} V^*_{inv}}{2} + w_i \left\{ -\frac{I^*_{inv} V^*_{inv}}{2} \cos(2\omega t) + F(2\omega t) \right\}}{V_{g\_i} - \left( R_{in\_i} I^*_{in\_i}(t) + L_{in\_i} \frac{dI^*_{in\_i}(t)}{dt} \right)} \quad (20)$$

$$I_{in\_i}^*(t) \approx \frac{I_{inv}^* V_{inv}^* \{g_i - w_i \cos(2\omega t)\}}{2V_{g\_i}} \qquad (21)$$

$$\langle I_{in\_i}^* \rangle_{rms} = \frac{I_{inv}^* V_{inv}^*}{2V_{g\_i}} \sqrt{g_i^2 + \frac{w_i^2}{2}} \qquad (22)$$

Here, for reference, if, for example, $g_i = w_i$ is satisfied, a reactive power is allocated in proportion to an active power (active-power proportional allocation). However, in a case of this allocation, if the signs of $g_i$ are different from each other, i.e., photovoltaic generation and charging of the storage battery are performed at the same time, a reactive power that cancels a reactive power supplied from the photovoltaic panel is supplied from the storage battery, and thus more reactive powers than necessary are supplied from the respective DC/DC converters 2. In this case, with the absolute value of $g_i$ set to be equal to $w_i$, proportional allocation may be performed such that the signs of reactive powers, i.e., phases of reactive currents, supplied from the respective DC/DC converters 2 coincide with each other.

On the other hand, if $w_i$ is determined so that the value of $g_i(I^*_{inv}·V^*_{inv} / 2) + w_i\{-(I^*_{inv}·V^*_{inv} / 2)\cos(2\omega t) + F(2\omega t)\}$ becomes constant, reactive powers are allocated so that powers supplied from the respective DC/DC converters 2 are equalized (power equalized allocation). In this allocation method, more reactive power is allocated to the DC/DC converter 2 that has a smaller supply amount of active power.

In addition, similarly to the above method, a method of performing allocation so that the currents of expression (20) are equalized (current equalized allocation) is also conceivable. If the currents are equally allocated, the peak value of a current flowing through each DC/DC converter 2 is minimized. Therefore, the current capacities of the DC reactor 11 and the switching elements Q11, Q12 can be minimized.

In expression (20), a part representing a voltage drop at the latter half of the denominator $V_{g\_i} - (R_{in\_i}I^*_{in\_i}(t) + L_{in\_i}(dI^*_{in\_i}(t) / dt)$ contains a temporally-varying component, and therefore, strictly, the first term also contains a reactive current component. However, as compared to the power supply voltage of about 200 V, the varying component is as small as several V, and therefore ignored in the following analysis. In addition, a reactive power $F(2\omega t)$ flowing through the intermediate capacitor 7 is also small, and therefore ignored. Thus, expression (21) is obtained. Further, by calculating the square root of mean square of expression (21), expression (22) representing the effective value of a current flowing through the DC/DC converter 2 is obtained.

If $w_i$ is set so that $(g_i^2 + (w_i^2/2))^{1/2}$ in expression (22) becomes constant, the power can be equally allocated. In addition, if $w_i$ is set so that $(g_i^2 + (w_i^2/2))^{1/2} / V_{g\_i}$ becomes constant, the current can be equally allocated.

For example, in a case where three DC/DC converters 2 connected to photovoltaic panels equally perform outputs and the storage battery is stopped, the value of $g_i$ is 1/3 for the DC/DC converters 2 for photovoltaic panel, and is 0 for the DC/DC converter 2 for storage battery. At this time, if $w_i$ is set at 1/6 for the DC/DC converters 2 for photovoltaic panel and 1/2 for the DC/DC converter 2 for storage battery, the value of the root part in expression (22) becomes $(\sqrt{2})/4$ for both of the DC/DC converters 2 for photovoltaic panel and the DC/DC converters 2 for storage battery, and thus the powers are equalized.

$$\sum_{i=1}^{n} \{I_{in\_i}^*(t)\}^2 R_i \approx \sum_{i=1}^{n} \left(\frac{I_{inv}^* V_{inv}^*}{2V_{g\_i}}\right)^2 \{g_i^2 - 2g_i w_i \cos(2\omega t) + w_i^2 \cos^2(2\omega t)\} R_i \qquad (23)$$

$$= \sum_{i=1}^{n} \left(\frac{I_{inv}^* V_{inv}^*}{2V_{g_i}}\right)^2 \left\{g_i^2 - 2g_i w_i \cos(2\omega t) + w_i^2 \frac{\cos(4\omega t) + 1}{2}\right\} R_i$$

$$\rightarrow \text{Av.} \sum_{i=1}^{n} \left(\frac{I_{inv}^* V_{inv}^*}{2V_{g\_i}}\right)^2 \left\{g_i^2 + \frac{w_i^2}{2}\right\} R_i = \left(\frac{I_{inv}^* V_{inv}^*}{2}\right)^2 \sum_{i=1}^{n} \left\{\left(\frac{g_i}{V_{g\_i}}\right)^2 R_i + \frac{1}{2}\left(\frac{w_i}{V_{g\_i}}\right)^2 R_i\right\} \qquad (24)$$

$$w_i = \frac{V_{g_i}^2}{\sum_{i=1}^{n} V_{g_i}^2} \qquad (R_1 = R_2 = \cdots = R_n) \qquad (25)$$

$$w_i = \frac{1}{n} \qquad \left(V_{g\_1} = V_{g\_2} = \cdots = V_{g\_n}\right) \qquad (26)$$

On the other hand, in order to minimize power loss caused by the resistance of the DC/DC converter, allocation may be performed with $w_i$ set so as to minimize expression (24). In expression (24), since $g_i$ and $w_i$ are orthogonal to each other, allocation may be performed with $w_i$ set so as to minimize the second term shown below.

$$\sum_{i=1}^{n} \left(\frac{w_i}{V_{g\_i}}\right)^2 R_i$$

In a case where all the DC/DC converters 2 are the same and their resistance components $R_i$ are equal to each other, power loss is minimized by performing allocation with $w_i$ set in accordance with expression (25). Further, in a case where all the voltages of the DC power supplies connected to the respective DC/DC converters 2 are the same, loss is minimized by simply allocating $w_i$ equally in accordance with the number of the DC/DC converters 2 as shown by expression (26). Therefore, unless all the values of $g_i$ are equal, the allocation setting for $w_i$ that minimizes the peak value of current does not coincide with the condition that minimizes power loss.

In the allocation methods for reactive currents described above, it is assumed that reactive currents are supplied from all the DC/DC converters 2. In this case, a reactive current flows through the storage battery, and therefore there is a problem that loss due to the internal resistance of the storage battery increases. In the case of photovoltaic panel, since the output impedance is comparatively great, if a capacitor having a great capacitance is provided between the DC/DC converter 2 and the photovoltaic panel, a reactive current is absorbed by this capacitor, and thus a reactive current hardly flows through the photovoltaic panel.

However, in the case of storage battery, since the impedance thereof is small, even if a capacitor is provided between the storage battery and the DC/DC converter 2, the effect thereof is small and a reactive current almost directly flows to the storage battery. Accordingly, it is preferable to allocate reactive currents using only the DC/DC converters 2 for photovoltaic panel while excluding the DC/DC converter 2 for storage battery. However, when charging/discharging of the storage battery is stopped, if a switch 5 provided between the storage battery and the DC/DC converter 2 is opened, a current does not flow to the storage battery, and therefore a reactive current can be allocated also to the DC/DC converter 2 for storage battery.

<<Example 1>>

(Case where all DC power supplies are photovoltaic panels)

Optimum allocation of reactive currents will be further discussed by showing specific examples, while, for the purpose of simplifying calculation, all the voltages of the DC power supplies are set at 200 V, and the voltage of the AC grid is set at 200 V (effective value).

In a case where photovoltaic panels are connected to all the four DC/DC converters, the peak value of a current flowing through each DC/DC converter and the sum of squares of those currents have been calculated while the allocation method for reactive currents is changed. Hereinafter, the four DC/DC converters are referred to as a first DC/DC converter, a second DC/DC converter, a third DC/DC converter, and a fourth DC/DC converter.

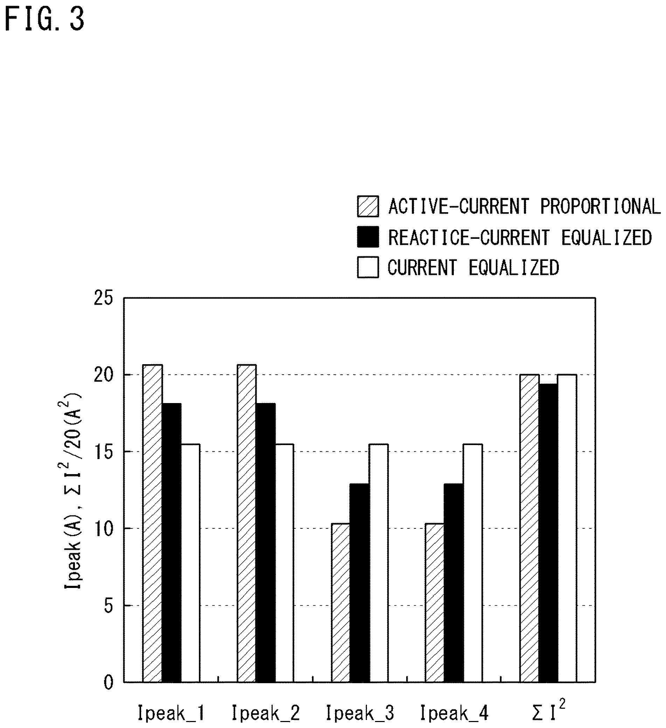

FIG. 3 shows, as a bar graph, a result of peak currents Ipeak (Ipeak_1 to Ipeak_4) of the DC/DC converters and the sum of squares of the currents thereof, in a scale of (1/20) for convenience sake, in a case where the outputs of the first DC/DC converter and the second DC/DC converter are set at 2067 W and the outputs of the third DC/DC converter and the fourth DC/DC converter are set at 1033 W. In the bar graph, a hatched bar indicates active-current proportional allocation, a filled bar indicates reactive-current equalized allocation, and an outlined bar indicates current equalized allocation.

As shown in the graph, in the case of active-current proportional allocation, the peak currents of the first DC/DC converter and the second DC/DC converter become maximum, i.e., 20.7 A. In the case of reactive-current equalized allocation, the peak currents of the first DC/DC converter and the second DC/DC converter are decreased to 17.1 A. In the case of current equalized allocation, the peak currents are further decreased to 15.5A. As for the sum of squares of currents, the value for reactive-current equalized allocation is the smallest. The difference thereof as compared to the sum of squares of currents for current equalized allocation is - 3.3%.

As in this example, if the maximum output is different among the DC/DC converters, it is also conceivable that current equalized allocation is employed to equalize the currents of all the DC/DC converters and elements having the same rating are used for the components such as the DC reactor and the switching elements. If the maximum outputs of all the DC/DC converters are the same, it is considered desirable to employ reactive-current equalized allocation to minimize loss.

<<Example 2>>

(Case of three DC/DC converters for solar battery and one DC/DC converter for storage battery)

(Case of selling surplus power of photovoltaic generation)

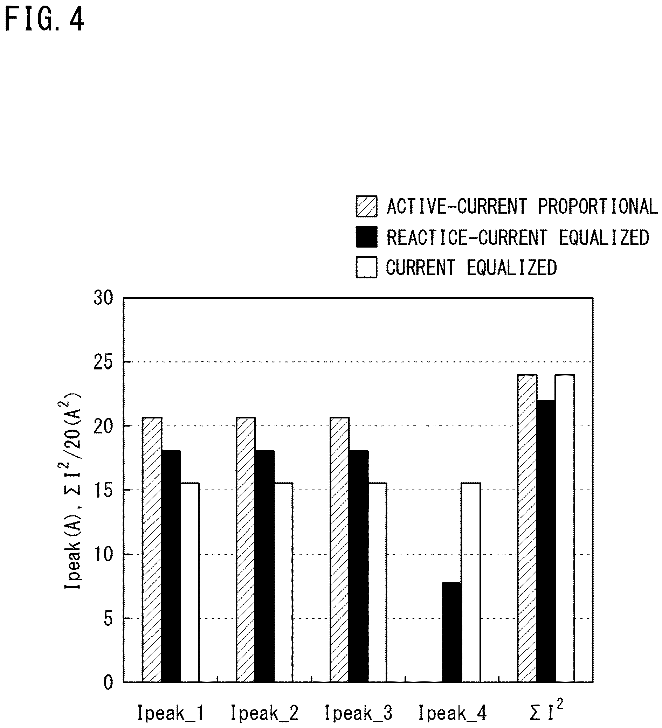

Next, a case where there are three (first to third) DC/DC converters for solar battery and one (fourth) DC/DC converter for storage battery will be described. First, a case where charging/discharging of the storage battery is stopped and the other three DC/DC converters for solar battery are operating at the maximum outputs, will be described. In this case, it is assumed that the storage battery is paralleled-off from the DC/DC converter, and the DC/DC converter for storage battery can supply only a reactive current. FIG. 4 shows the peak values of currents flowing through the respective DC/DC converters and the sum of squares of currents of all the DC/DC converters in this case.

The current peak values Ipeak_1, Ipeak_2, Ipeak_3 for the first to third DC/DC converters are 20.7 A for active-current proportional allocation, 18.1 A for reactive-current equalized allocation, and 15.5 A for current equalized allocation. As for the sum of squares of the currents, active-current proportional allocation and current equalized allocation indicate the same value, and the value for reactive-current proportional allocation is smaller by 8.3% as compared to the other two allocations. Thus, when the photovoltaic panel is generating a power, if the storage battery is stopped and meanwhile a reactive current is supplied from the DC/DC converter for storage battery by reactive-current equalized allocation, conversion efficiency can be enhanced. Alternatively, if current equalized allocation is used, the efficiency does not change, but the peak value of a current flowing through the DC/DC converter for solar battery can be reduced and therefore the ratings of components such as the DC reactor can be reduced. Such methods are effective in a case of not performing so-called double power generation in which a surplus power of photovoltaic generation is sold and boosting-up by the storage battery is performed.

(Case of charging storage battery with surplus power of photovoltaic generation)

From now on, the purchase price of a surplus power is further decreasing, and therefore there will be a less advantage in selling a power. Accordingly, without selling a surplus power of photovoltaic generation, the surplus power will be charged into the storage battery so as to be used for self-consumption. In this case, when photovoltaic generation is being performed, the storage battery is being charged, and therefore it is impossible to supply a reactive current from the DC/DC converter for storage battery. As a result, a reactive current is to be supplied from only the DC/DC converter for solar battery. However, as the self-consumption decreases and the proportion of charging of the storage battery increases, the output of the inverter decreases and therefore the necessary amount of reactive current also decreases.

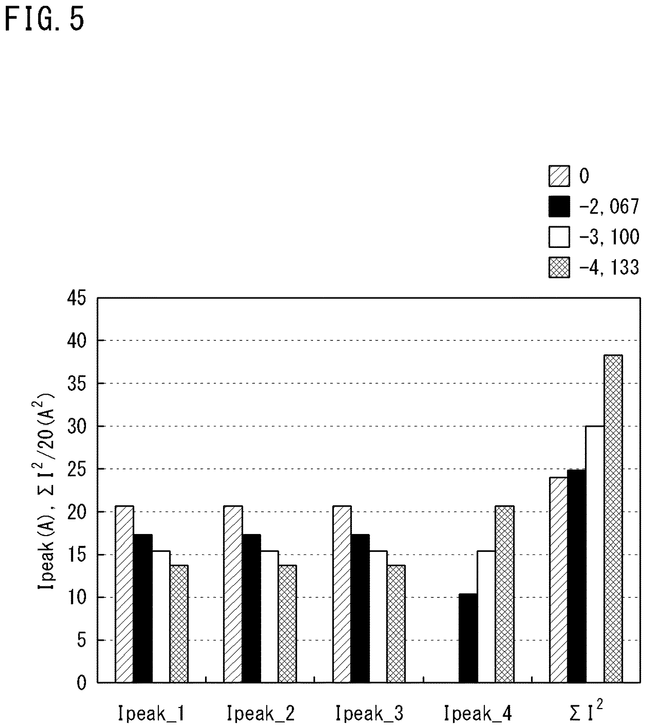

FIG. 5 shows the current peak values of the respective DC/DC converters and the sum of squares of currents of all the DC/DC converters in a case where the outputs of the first to third DC/DC converters for solar battery are 2067 W and the output (for charging) of the fourth DC/DC converter for storage battery is changed to 0 W, - 2067 W, - 3100 W, and - 4133 W. Reactive currents are equally allocated for only the first to third DC/DC converters, without causing a reactive current to flow through the fourth DC/DC converter for storage battery.

When charging of the storage battery is zero, the current peak of the DC/DC converter for solar battery is 20.7 A at maximum, but as the charging amount for the storage battery increases, a reactive current to be borne decreases and therefore the current peak decreases. On the other hand, since a current flowing through the DC/DC converter for storage battery is only an active current, the current value becomes the same value of 20.7 A as the current peak value of the DC/DC converter for solar battery, when the charging amount is 4133 W.

Therefore, as long as necessary cooling can be performed, it is possible to perform charging up to 4 kW using the same DC reactor and semiconductor devices as those used for the DC/DC converter for solar battery. In a home where nobody is likely to be present during the day so that power consumption is small, there is a large amount of surplus power in photovoltaic generation, and therefore it is desirable that the charging capacity is great. If the DC/DC converter for storage battery is caused to bear only an active current and thereby it becomes possible to supply more active current, the charging capacity can be increased accordingly, and this is advantageous for the purpose of self-consumption of surplus current.

(Case of performing photovoltaic generation and discharging of storage battery at the same time)

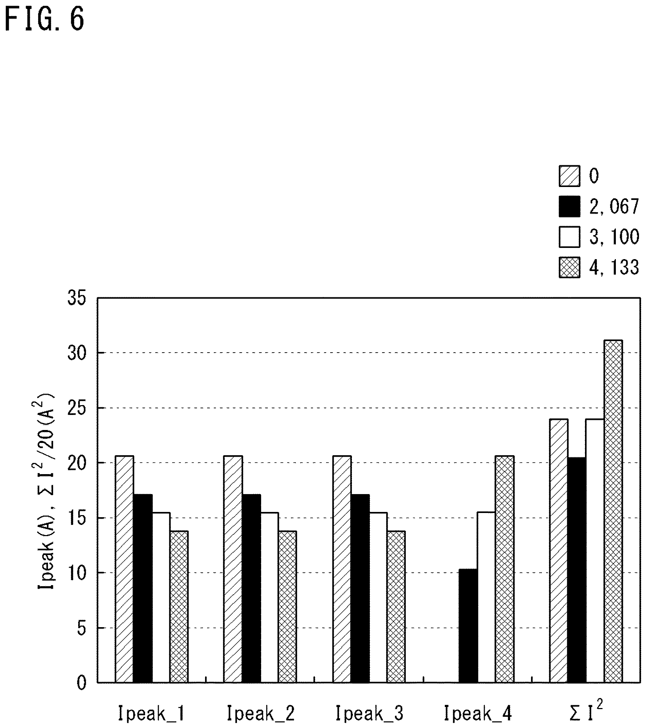

In a case where self-consumption is greater than power generation, discharging of the storage battery is performed at the same time as power generation. FIG. 6 shows the current peak values of the respective DC/DC converters and the sum of squares of currents of all the DC/DC converters in this case. For the outputs of the first to third DC/DC converters for solar battery, a power obtained by subtracting the output of the fourth DC/DC converter for storage battery from the maximum output 6200 W of the power conversion device is equally allocated, while the output of the fourth DC/DC converter is changed to 0 W, 2067 W, 3100 W, and 4133 W.

Reactive currents are equally allocated for only the first to third DC/DC converters for solar battery. A result when the output of the fourth DC/DC converter for storage battery is 0 W is the same as that in FIG. 5. In FIG. 5, as charging of the storage battery increases, a reactive current to be borne by the fourth DC/DC converter for solar battery decreases. However, in FIG. 6, a reactive current to be borne by the fourth DC/DC converter for solar battery does not change, and as discharging of the storage battery increases, the active current decreases. The sum of squares of currents becomes maximum when discharging of the storage battery is at 4133 W.

(Case where charging/discharging of storage battery is performed when photovoltaic generation is being stopped)

In a case of performing charging or discharging of the storage battery when photovoltaic generation is being stopped, in order not to cause a reactive current to flow to the storage battery, the DC/DC converter for solar battery needs to supply a reactive current. If the DC/DC converter for solar battery is operated when photovoltaic generation is not being performed, the capacitor present on the solar battery side of the DC/DC converter is charged by a current flowing from the intermediate bus, and thus the voltage of the capacitor increases. At this time, a forward-direction voltage is applied from outside to each P-N junction of the solar battery, thereby establishing a conductive state, and thus the battery side of the DC/DC converter is short-circuited.

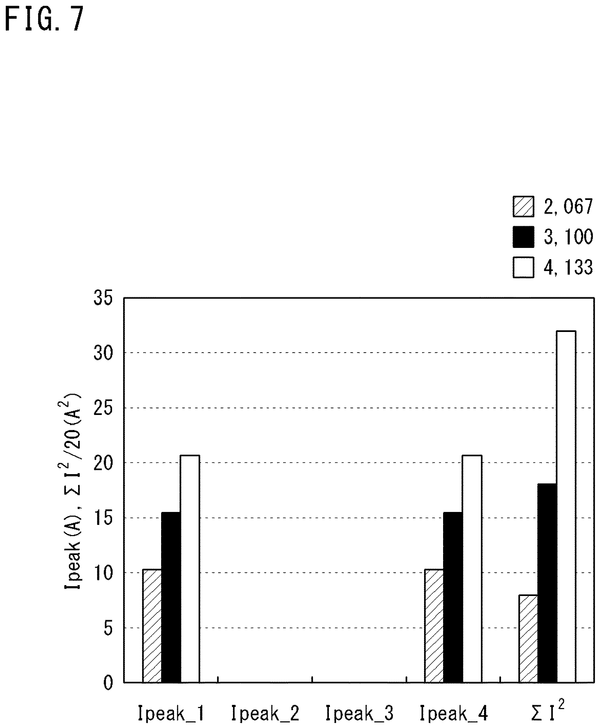

In this state, it is impossible to supply a reactive power from the capacitor of the DC/DC converter for solar battery. Therefore, in order to supply a reactive current from the DC/DC converter when the solar battery is not generating power, it is necessary to parallel-off the photovoltaic panel by providing a switch 5 that can be controlled to be opened/closed by the control unit 20, between the solar battery and the DC/DC converter. For the purpose of suppressing cost increase as much as possible, only one DC/DC converter is used for supplying a reactive current when power generation is stopped. Under this condition, the current peak values and the sum of squares have been calculated. FIG. 7 is a bar graph showing a result of this calculation.

The first DC/DC converter is used for supplying a reactive current, while the second DC/DC converter and the third DC/DC converter are stopped. While the fourth DC/DC converter for storage battery supplies only an active current, the calculation has been performed for the cases where the output thereof is 2067 W, 3100 W, and 4133 W. When discharging of the storage battery is at 4133 W, the peak values of the active current flowing through the fourth DC/DC converter and the reactive current flowing through the first DC/DC converter are both 10.7 A. FIG. 7 shows a case of performing discharging of the storage battery, but also when charging is performed, the same result is obtained except that the direction of the current is changed.

<<Supplement>>

It is noted that the embodiments disclosed herein are merely illustrative in all aspects and should not be recognized as being restrictive. The scope of the present invention is defined by the scope of the claims, and is intended to include meaning equivalent to the scope of the claims and all modifications within the scope.

**REFERENCE SIGNS LIST**

1 power conversion device
2 DC/DC converter
3 DC power supply
4 DC-side capacitor
5 switch
6 intermediate bus
7 intermediate capacitor

8 DC/AC converter
9 AC-side capacitor
11 DC reactor
13 AC reactor
14 filter circuit
15 AC load
16 commercial power grid
17 AC grid
20 control unit
31 voltage sensor
32 current sensor
33 voltage sensor
34 current sensor
35 voltage sensor
Q11, Q12, Q81, Q82, Q83, Q84 switching element
d11,d12 diode

**Claims**

1. A power conversion device that performs power conversion via an intermediate bus between a plurality of DC power supplies and an AC grid, the power conversion device comprising:

   a plurality of DC/DC converters respectively provided between the intermediate bus and the plurality of DC power supplies;
   an intermediate capacitor connected to the intermediate bus;
   a DC/AC converter provided between the intermediate bus and the AC grid; and
   a control unit configured to control the plurality of DC/DC converters and the DC/AC converter, the control unit performing control of allocating, to the plurality of DC/DC converters, an active power to be outputted from the DC/AC converter, and allocating, to the plurality of DC/DC converters, a sum of reactive powers to be outputted from the DC/AC converter and the intermediate capacitor, using an allocation coefficient different from an allocation coefficient for the active power.

2. The power conversion device according to claim 1, wherein
   the control unit performs control of allocating the sum of the reactive powers to the plurality of DC/DC converters so that peak values of powers or currents of the plurality of DC/DC converters are equalized.

3. The power conversion device according to claim 1, wherein
   when maximum outputs of the plurality of DC/DC converters are the same as each other, the control unit performs control of allocating the sum of the reactive powers to the plurality of DC/DC converters so that reactive powers or reactive currents of the plurality of DC/DC converters are equalized.

4. The power conversion device according to claim 1, wherein
   the control unit sets the allocation coefficient for the reactive currents, in proportion to a square of an input voltage to each of the plurality of DC/DC converters.

5. The power conversion device according to any one of claims 1 to 4, wherein
   the control unit excludes, from a target of reactive power allocation, the DC/DC converter to which a storage battery is connected, among the plurality of DC/DC converters.

6. A control method for a power conversion device that includes: a plurality of DC/DC converters respectively provided between an intermediate bus and a plurality of DC power supplies; an intermediate capacitor connected to the intermediate bus; a DC/AC converter provided between the intermediate bus and an AC grid; and a control unit configured to control the plurality of DC/DC converters and the DC/AC converter, the power conversion device being configured to perform power conversion via the intermediate bus between the plurality of DC power supplies and the AC grid, the control method being executed by the control unit and comprising:
   allocating, to the plurality of DC/DC converters, an active power to be outputted from the DC/AC converter, and allocating, to the plurality of DC/DC converters, a sum of reactive powers to be outputted from the DC/AC converter and the intermediate capacitor, using an allocation coefficient different from an allocation coefficient for the active power.

7. A power conversion device that performs power conversion via an intermediate bus between a plurality of DC power supplies and an AC grid, the power conversion device comprising:

a plurality of DC/DC converters respectively provided between the intermediate bus and the plurality of DC power supplies;
an intermediate capacitor connected to the intermediate bus;
a DC/AC converter provided between the intermediate bus and the AC grid; and
a control unit configured to control the plurality of DC/DC converters and the DC/AC converter, the control unit performing control of allocating, to the plurality of DC/DC converters, an active power to be outputted from the DC/AC converter, and allocating, to the plurality of DC/DC converters, a sum of reactive powers to be outputted from the DC/AC converter and the intermediate capacitor, using an allocation coefficient different from an allocation coefficient for the active power, thereby equalizing peak values of powers of the DC/DC converters.

FIG. 1

FIG. 2

CONTROL UNIT

# FIG. 3

Legend:
- ◪ ACTIVE-CURRENT PROPORTIONAL
- ■ REACTICE-CURRENT EQUALIZED
- ☐ CURRENT EQUALIZED

Y-axis: Ipeak (A), $\Sigma I^2 / 20 (A^2)$

X-axis: Ipeak_1, Ipeak_2, Ipeak_3, Ipeak_4, $\Sigma I^2$

# FIG. 4

# FIG. 5

# FIG. 6

FIG. 7

## INTERNATIONAL SEARCH REPORT

International application No.

PCT/JP2016/069818

| A. CLASSIFICATION OF SUBJECT MATTER |
| --- |
| *H02M7/48*(2007.01)i, *H02J3/38*(2006.01)i |

According to International Patent Classification (IPC) or to both national classification and IPC

| B. FIELDS SEARCHED |
| --- |
| Minimum documentation searched (classification system followed by classification symbols)<br>H02M7/48, H02J3/38 |

| Documentation searched other than minimum documentation to the extent that such documents are included in the fields searched |
| --- |
| Jitsuyo Shinan Koho          1922–1996   Jitsuyo Shinan Toroku Koho   1996–2016<br>Kokai Jitsuyo Shinan Koho    1971–2016   Toroku Jitsuyo Shinan Koho   1994–2016 |

| Electronic data base consulted during the international search (name of data base and, where practicable, search terms used) |
| --- |

C. DOCUMENTS CONSIDERED TO BE RELEVANT

| Category* | Citation of document, with indication, where appropriate, of the relevant passages | Relevant to claim No. |
| --- | --- | --- |
| A | WO 2014/199795 A1 (Sumitomo Electric Industries, Ltd.), 18 December 2014 (18.12.2014), paragraphs [0035] to [0105]; fig. 1 to 3 & US 2016/0126742 A1 paragraphs [0063] to [0195]; fig. 1 to 3 & EP 3010135 A1 & AU 2014279386 A & CN 105229912 A & TW 201513551 A | 1–7 |
| A | JP 2014-099986 A (Toshiba Corp.), 29 May 2014 (29.05.2014), paragraphs [0009] to [0023]; fig. 1 to 5 (Family: none) | 1–7 |

| ☒ | Further documents are listed in the continuation of Box C. | ☐ | See patent family annex. |
| --- | --- | --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    07 September 2016 (07.09.16) | Date of mailing of the international search report<br>    20 September 2016 (20.09.16) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br><br>Telephone No. |

Form PCT/ISA/210 (second sheet) (January 2015)

**INTERNATIONAL SEARCH REPORT**

International application No.

PCT/JP2016/069818

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2006-060983 A (Matsushita Ecology Systems Co., Ltd.), 02 March 2006 (02.03.2006), paragraphs [0065] to [0086]; fig. 1, 3, 6, 9 (Family: none) | 1-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015205364 A
- JP 2014241714 A
- JP 2014241715 A